# EUROPÄISCHE PATENTSCHRIFT

(11) **EP 1 516 068 B1**
(45) Veröffentlichungstag und Bekanntmachung des Hinweises auf die Patenterteilung: **13.09.2006**
(21) Anmeldenummer: 03761425.2
(22) Anmeldetag: 24.06.2003
(51) Int. Cl.: C21D 1/09, B23K 26/00, B24B 1/00

(54) **VERFAHREN ZUM GLÄTTEN UND POLIEREN VON OBERFLÄCHEN DURCH BEARBEITUNG MIT ENERGETISCHER STRAHLUNG**
METHOD FOR SMOOTHING AND POLISHING SURFACES BY TREATING THEM WITH ENERGETIC RADIATION
PROCEDE POUR LISSER ET POLIR DES SURFACES PAR TRAITEMENT AVEC UN RAYONNEMENT ENERGETIQUE

(30) Priorität: 27.06.2002 DE 10228743
(43) Veröffentlichungstag der Anmeldung: 23.03.2005
(73) Patentinhaber: Fraunhofer-Gesellschaft zur Förderung der angewandten Forschung e.V., 80686 München (DE)
(72) Erfinder: WISSENBACH, Konrad, 52134 Herzogenrath (DE); WILLENBORG, Edgar, 52062 Aachen (DE); PIRCH, Norbert, 52074 Aachen (DE)
(74) Vertreter: Gagel, Roland
(86) Internationale Anmeldenummer: PCT/DE2003/002093
(87) Internationale Veröffentlichungsnummer: WO 2004/003239

(56) Entgegenhaltungen:
- EP-A- 0 601 451
- WO-A-96/31315
- DE-A- 4 320 408
- SRIDHAR, K. (NAVAL MATERIALS RESEARCH LABORATORY) ET AL: "Formation of highly corrosion resistant stainless steel surface alloys for marine environments by laser surface alloying." CORROSION 98 (1998), 705/1-705/14, NUMERICAL DATA, PHOTOMICROGRAPHS, GRAPHS, 18 REF. NATIONAL ASSOCIATION OF CORROSION ENGINEERS. P.O. BOX 218340, HOUSTON, TX 77084, USA CONFERENCE: CORROSION 98, SAN DIEGO, CA, USA, 22-27 MAR. 1998, XP001154715

## Beschreibung

### Technisches Anwendungsgebiet

Die vorliegende Erfindung betrifft ein Verfahren zum Glätten und Polieren von Oberflächen durch Bearbeitung mit energetischer Strahlung, insbesondere Laserstrahlung, bei dem die zu glättende Oberfläche in einer ersten Bearbeitungsstufe unter Einsatz der energetischen Strahlung mit ersten Bearbeitungsparametern zumindest einmal bis zu einer ersten Umschmelztiefe umgeschmolzen wird, die größer als eine Strukturtiefe von zu glättenden Strukturen der zu glättenden Oberfläche und ≤ 100 µm ist. Das Verfahren lässt sich bspw. für die Endbearbeitung von Werkzeugen und Formen im Maschinenbau einsetzen. Im modernen Maschinenbau und insbesondere im Werkzeug- und Formenbau werden hohe Anforderungen an die Qualität technischer Oberflächen gestellt. Fertigungsverfahren, wie bspw. Fräsen oder Erodieren, sind in den erreichbaren Oberflächenrauigkeiten jedoch begrenzt. Werden glatte, glänzende bzw. polierte Oberflächen benötigt, müssen weitere Fertigungsschritte, wie Schleifen und Polieren, folgen.

### Stand der Technik

Die Endbearbeitung von Werkzeugen und Formen erfolgt heutzutage zum überwiegenden Teil durch manuelles Polieren. Die Handarbeit wird dabei durch elektrisch und pneumatisch angetriebene Geräte mit bis zu Ultraschall reichenden Arbeitsfrequenzen unterstützt. Zur Erreichung der Endpolierstufe werden die Arbeitsgänge Grobschleifen, Feinschleifen und Polieren mit immer feineren Polierpasten bis hin zur Diamantpaste abgearbeitet. Typische Polierzeiten liegen bei 30 min/cm². Es sind Rauhtiefen von Ra < 0,01 µm erreichbar.

Maschinelle Polierverfahren haben den Nachteil, dass die bekannten Verfahren bei komplexen dreidimensionalen Geometrien der zu polierenden Oberflächen nicht angewendet werden können oder nur unzureichende Ergebnisse liefern.

Aus der DE 42 41 527 A1 ist ein Verfahren zum Aufhärten von Maschinenbauteilen durch Oberflächenaufwärmung mit einem Laserstrahl bekannt, mit dem gleichzeitig eine Glättung der Oberfläche des Maschinenbauteils erreicht werden kann. Die Bauteile liegen hierbei als Hartgussteile mit ledeburitischem Gefüge oder als Stahlteile mit perlitischem Gefüge vor. Bei dem Verfahren wird mit dem Laserstrahl eine Oberflächenschicht der Bauteile bis in die Nähe der Schmelztemperatur erwärmt, so dass in einer Randschicht eine Diffusion des Kohlenstoffs aus den Zementitlamellen des Ledeburits bzw. des Perlits in die weichen zwischenlamellaren Ferritbereiche stattfindet. Diese Diffusion des Kohlenstoffs führt zur gewünschten Aufhärtung der Oberfläche. Durch eine geeignete Einstellung der Laserparameter mit Energiedichten im Bereich von 10³ - 10⁵ W/cm² wird zusätzlich ein ausgeprägtes Abdampfen und Schmelzen einer dünnen Oberflächenhaut erreicht, was zu einem gleichzeitigen Mikroglätten der Oberfläche führt. Für diese Anwendung werden Laserleistungen von ca. 4 - 12 kW benötigt.

Weiterhin ist aus der EP 0 819 036 B1 ein Verfahren zum Polieren von beliebigen dreidimensionalen Formflächen mittels eines Lasers bekannt, bei dem die Kontur des zu bearbeitenden Werkstückes zuerst vermessen wird und dann aus der vorgegebenen Sollform und der gemessenen Istform die Bearbeitungsstrategie und die Bearbeitungsparameter abgeleitet werden. Das Glätten und Polieren wird durch einen abtragenden Prozess realisiert. Für das Laserpolieren wird ein Bereich niedriger Laserintensität vorgeschlagen, da ein großer Materialabtrag bei dieser Anwendung nicht gewünscht ist. Weitere Hinweise auf Bearbeitungsstrategien oder Bearbeitungsparameter zur Erreichung eines optimalen Glättungsgrades finden sich in dieser Druckschrift jedoch nicht. Der Kern des vorgeschlagenen Verfahrens besteht vielmehr darin, durch Abtasten der Oberfläche mittels einer 3D-Konturmesseinrichtung die Abweichung der Istform von der Sollform zu erkennen, aus dieser Abweichung geeignete Bearbeitungsparameter zu errechnen und einzusetzen und diese Schritte zu wiederholen, bis die Istform erreicht ist. Der hierbei erforderliche Einsatz einer 3D-Konturmesseinrichtung ist jedoch aufwendig und durch die erforderliche Messgenauigkeit mit sehr hohen Kosten verbunden.

Aus der DE 197 06 833 A1 ist ein Verfahren zum Glätten und Polieren von Oberflächen gemäß dem Oberbegriff des Patentanspruches 1 bekannt. Bei diesem Verfahren wird die Oberfläche mit gepulster Laserstrahlung mit einer Pulsdauer zwischen 10 ns und 10 µs in einer Tiefe von 2 bis 3 µm mit jedem Laserpuls kurz aufgeschmolzen. Die mit jedem Laserpuls neu erzeugte Schmelze erstarrt dabei wieder, bevor der nächste Laserpuls eintrifft. Das Verfahren eignet sich jedoch nur für die Glättung von Oberflächen mit sehr geringen Oberflächenrauigkeiten von Rz ≤ 3 µm.

Die DE 4320408 A1 beschreibt ein Verfahren zur Prozesskontrolle und Regelung bei der Oberflächenbearbeitung von Werkstücken mit gepulster Laserstrahlung, bei dem ebenfalls die Bearbeitungsparameter auf Basis eines Soll/Ist-Vergleichs während der Bearbeitung geregelt werden.

Die Aufgabe der vorliegenden Erfindung besteht darin, ein Verfahren zum Glätten und Polieren von Oberflächen durch Bearbeitung mit energetischer Strahlung, insbesondere Laserstrahlung, anzugeben, das keine teuren Messinstrumente erfordert und mit dem beliebige dreidimensionale Oberflächen, insbesondere Metalloberflächen, schnell und kostengünstig automatisiert poliert werden können.

### Darstellung der Erfindung

Die Aufgabe wird mit dem Verfahren gemäß Patentanspruch 1 gelöst. Vorteilhafte Ausgestaltungen des Verfahrens sind Gegenstand der Unteransprüche oder lassen sich aus der nachfolgenden Beschreibung und den Ausführungsbeispielen entnehmen.

Beim vorliegenden Verfahren zum Glätten bzw. Polieren von Oberflächen durch Bearbeitung mit energetischer Strahlung, beispielsweise Laser- oder Elektronenstrahlung, wird die zu glättende Oberfläche in einer ersten Bearbeitungsstufe unter Einsatz der energetischen Strahlung mit ersten Bearbeitungsparametern zumindest einmal bis zu einer ersten Umschmelztiefe von ca. 5 bis 100 µm umgeschmolzen, die größer als eine Strukturtiefe von zu glättenden Strukturen der zu glättenden Oberfläche ist, wobei kontinuierliche Strahlung oder gepulste Strahlung mit einer Pulsdauer ≥ 100µs eingesetzt wird.

Anschließend wird eine zweite Bearbeitungsstufe unter Einsatz der energetischen Strahlung mit zweiten Bearbeitungsparametern durchgeführt, in der nach der ersten Bearbeitungsstufe auf der Oberfläche verbleibende Mikrorauigkeiten durch Umschmelzen bis zu einer zweiten Umschmelztiefe, die kleiner als die erste Umschmelztiefe ist, und Verdampfen von Rauhigkeitsspitzen eingeebnet werden. Das Verfahren beruht somit auf einem mehrstufigen Bearbeitungsprozess, der in eine Grob- und eine Feinstbearbeitung unterteilt werden kann. In der im Folgenden auch als Grobbearbeitung bezeichneten ersten Bearbeitungsstufe wird die zu glättende Oberfläche unter Einsatz der energetischen Strahlung mit ersten Bearbeitungsparametern ein oder mehrmals bis zu einer ersten Umschmelztiefe in einer Randschicht umgeschmolzen. Bei diesem Umschmelzprozess werden Makrorauigkeiten, die bspw. aus einem vorangegangenen Fräs- bzw. Erodierprozess stammen können, beseitigt. In einer im Folgenden auch als Feinstbearbeitung bezeichneten zweiten Bearbeitungsstufe werden anschließend unter Einsatz der energetischen Strahlung mit zweiten Bearbeitungsparametern nach der ersten Bearbeitungsstufe auf der Oberfläche verbleibende Mikrorauigkeiten eingeebnet. Die zweite Bearbeitungsstufe der Feinstbearbeitung beinhaltet somit einen kombinierten Abtrag- und Umschmelzprozess, bei dem die Dicke der umgeschmolzenen Randschicht jedoch geringer als die Dicke der in der ersten Bearbeitungsstufe umgeschmolzenen Randschicht ist.

Mit dem vorgeschlagenen Verfahren ist es möglich, beliebige dreidimensionale Werkstückoberflächen schnell und kostengünstig automatisiert zu polieren. Eine Vermessung der Kontur der zu polierenden Oberfläche ist hierbei nicht erforderlich. Durch den mehrstufigen Bearbeitungsprozess mit unterschiedlichen ersten und zweiten Bearbeitungsparametern wird zudem ein hoher Glanzgrad der polierten Oberfläche erreicht.

Das Verfahren lässt sich insbesondere zum Glätten von dreidimensionalen Metalloberflächen einsetzen. So wurde es bspw. bereits zum Glätten und Polieren von Werkstücken aus den Stählen 1.2343, 1.2767 und 1.2311 sowie aus Titanwerkstoffen eingesetzt. Selbstverständlich lässt sich das vorliegende Verfahren auch bei anderen Metallen und Nichtmetallen, wie bspw. bei Werkstücken aus Kunststoffen, einsetzen. Der Fachmann muss hierbei lediglich die Bearbeitungsparameter den zu bearbeitenden Werkstoffen anpassen, um die Bedingungen für die erste und zweite Bearbeitungsstufe zu erreichen. Die ersten Bearbeitungsparameter werden dabei vorzugsweise so gewählt, dass eine oder nur eine möglichst geringe Abtragung von Material stattfindet, da das Glätten in dieser ersten Bearbeitungsstufe alleine durch das Umschmelzen der Randschicht bis zur ersten Umschmelztiefe erfolgt. Beim Glätten und Polieren von Kunststoffen ist die Durchführung nur der ersten Bearbeitungsstufe bereits ausreichend, um hervorragende Glättungsergebnisse zu erreichen.

Durch den Einsatz von kontinuierlicher oder gepulster energetischer Strahlung, insbesondere Laserstrahlung, mit einer großen Pulsdauer ≥ 100 µs wird das ein- oder mehrmalige Umschmelzen der Randschicht bis zur ersten Umschmelztiefe zu erreicht. Demgegenüber wird in der zweiten Bearbeitungsstufe vorzugsweise gepulste Strahlung mit einer Pulsdauer von ≤ 5 µs eingesetzt, um die für den kombinierten Umschmelz- und Abtragprozess erforderlichen höheren Intensitäten zu erzeugen. Die Oberfläche wird bei dieser zweiten Bearbeitungsstufe vorzugsweise lediglich bis zu einer zweiten Umschmelztiefe von maximal 5 µm umgeschmolzen, während die größere erste Umschmelztiefe in der ersten Bearbeitungsstufe vorzugsweise im Bereich zwischen 10 und 80 µm liegt. Diese erste Umschmelztiefe in der ersten Bearbeitungsstufe ist von der Größe der Makrorauigkeiten abhängig, die das zu glättende Werkstück aufweist. Je größer die zu glättenden Makrorauigkeiten sind, desto größer muss auch die erste Umschmelztiefe gewählt werden, um eine ausreichende Einebnung der Makrorauigkeiten zu erreichen.

Das Glätten und Polieren der Oberflächen mit der energetischen Strahlung sollte weiterhin unter einer Schutzgasabschirmung durchgeführt werden. Dies kann durch eine Bearbeitung innerhalb einer mit einem Schutzgas gefüllten Prozesskammer oder durch Zufuhr des Schutzgases mittels einer Düse zu den gerade in Bearbeitung befindlichen Oberflächenbereichen erfolgen. Als Schutzgase können bspw. Argon, Helium oder Stickstoff eingesetzt werden.

Optimale Glättungsergebnisse werden beim vorliegenden Verfahren erreicht, wenn die Oberfläche des Werkstückes in der ersten Bearbeitungsstufe mehrmals nacheinander, vorzugsweise mit von Umschmelzvorgang zu Umschmelzvorgang abnehmender erster Umschmelztiefe, umgeschmolzen wird. Die Bearbeitung mit der energetischen Strahlung wird dabei, wie auch in der zweiten Bearbeitungsstufe, in bekannter Weise durch Abrastern der Oberfläche mittels des energetischen Strahls durchgeführt. Diese Abrasterung erfolgt in parallelen Bahnen, wobei sich die einzelnen durch den Durchmesser des energetischen Strahls in der Breite festgelegten Bahnen teilweise überlappen sollten. Bei dem mehrmaligen Umschmelzen der Oberfläche wird die Bearbeitungsrichtung vorzugsweise zwischen den einzelnen Umschmelzvorgängen um einen Winkel von z.B. 90° gedreht, so dass die Bahnen aufeinander folgender Umschmelzvorgänge senkrecht zueinander liegen.

### Kurze Beschreibung der Zeichnungen

Das vorliegende Verfahren wird nachfolgend anhand eines Ausführungsbeispiels in Verbindung mit den Zeichnungen ohne Beschränkung des allgemeinen Erfindungsgedankens nochmals kurz erläutert. Hierbei zeigen:
- Fig. 1: schematisch anhand einer Skizze die Abrasterung der zu glättenden Oberfläche mit einem Laserstrahl;
- Fig. 2: stark schematisiert ein Beispiel für ein Ausgangsprofil einer Oberfläche sowie das Resultat unterschiedlicher Polierkonzepte;
- Fig. 3: einen Vergleich des Oberflächenprofils einer unbearbeiteten gefrästen Oberfläche mit dem Oberflächenprofil der Oberfläche nach der ersten Bearbeitungsstufe des vorliegenden Verfahrens;
- Fig. 4: ein Beispiel für die Bearbeitungsstrategie beim Aneinandersetzen mehrerer Bearbeitungsabschnitte;
- Fig. 5: ein Beispiel für die Bearbeitungsstrategie zum Erhalt von Kanten an der zu glättenden Oberfläche;
- Fig. 6: schematisch ein Beispiel für die unterschiedlichen Umschmelztiefen der ersten und zweiten Bearbeitungsstufe des vorliegenden Verfahrens;
- Fig. 7: eine Darstellung des gemessenen Oberflächenprofils nach der ersten und nach der zweiten Bearbeitungsstufe im Vergleich;
- Fig. 8: eine photographische Darstellung einer Oberfläche vor der Glättung, nach der ersten Bearbeitungsstufe sowie nach der zweiten Bearbeitungsstufe mit dem vorliegenden Verfahren; und
- Fig. 9: ein Beispiel für die Glättung einer Oberfläche unter Beibehaltung von übergeordneten Strukturen mit dem vorliegenden Verfahren.

### Wege zur Ausführung der Erfindung

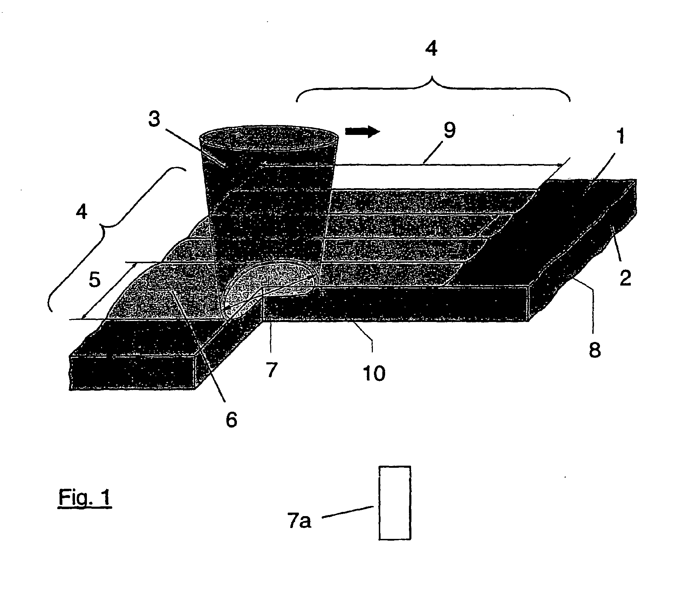

Figur 1 zeigt stark schematisiert den Bearbeitungsprozess beim vorliegenden Verfahren durch Abrastern der Oberfläche 1 des zu bearbeitenden Werkstückes 2 mit einem Laserstrahl 3. Der Laserstrahl 3 wird hierbei in parallelen Bahnen 6, vorzugsweise mäanderförmig, über einen Abschnitt 4 der zu bearbeitenden Oberfläche 1 geführt. Die Breite 5 (Spurbreite) der einzelnen Bahnen 6 ist durch den Durchmesser 7 des Laserstrahls an der Oberfläche 1 vorgegeben. Dieser Strahldurchmesser 7 kann selbstverständlich zur Erzielung einer geeigneten Intensität oder Spurbreite mit Hilfe einer vorgeschalteten Optik angepasst werden. Der Laserstrahl 3 wird hierbei in der mit dem Pfeil angegebenen Richtung mit einer vorgebbaren Scangeschwindigkeit über die Oberfläche 1 geführt. Benachbarte Bahnen 6 überlappen sich hierbei durch Wahl eines Spurenversatzes 8, der kleiner als die Spurbreite 7 ist. Die Länge 9 der einzelnen Bahnen 6 kann vorgegeben werden, ist jedoch durch das eingesetzte Laser-Abtastsystem begrenzt. Zur Bearbeitung größerer Oberflächenbereiche müssen daher mehrere der dargestellten Abschnitte 4 nacheinander bearbeitet werden. In der Figur 1 ist auch beispielhaft eine erste Umschmelztiefe 10 angedeutet, bis zu der das Werkstück 2 in der ersten Bearbeitungsstufe des vorliegenden Verfahrens umgeschmolzen wird. Neben einem runden Strahlquerschnitt lässt sich selbstverständlich auch ein anderer, beispielsweise rechteck- bzw. linienförmiger, Strahlquerschnitt 7a einsetzen wie er im unteren Teil der Figur beispielhaft angedeutet ist.

In dieser ersten Bearbeitungsstufe wird ein kontinuierliches oder gepulstes Lasersystem mit Pulslängen > 0,1 ms eingesetzt. Die Randschicht des Werkstückes 2 wird dabei gerade so tief aufgeschmolzen, dass auf der Oberfläche 1 vorhandene Rauigkeiten geglättet werden. Diese erste Umschmelztiefe 10 ist an die Ausgangsrauigkeit anzupassen. Typische erste Umschmelztiefen 10 liegen im Bereich zwischen 10 und 100 µm. Je größer die Unebenheiten der Ausgangsoberfläche 1 sind, desto tiefer muss umgeschmolzen werden, um den notwendigen Volumenausgleich zu ermöglichen. So sind bspw. für gefräste Oberflächen größere erste Umschmelztiefen erforderlich als für geschliffene Oberflächen. Durch den Einsatz eines kontinuierlichen Laserstrahls bzw. eines gepulsten Laserstrahls mit langen Pulslängen wird bei dieser Grobbearbeitung der ersten Bearbeitungsstufe ein Abdampfen von Material aus der Oberfläche 1 vermieden. Dadurch kann der Polierprozess mit deutlich geringerer Energie durchgeführt werden als bei Anwendungen, bei denen die Makrorauigkeiten abgetragen werden. Weiterhin werden lokale Überhitzungen im Schmelzbad, die zu einem Materialabtrag und zu unerwünschten Schmelzbadbewegungen und damit zu einer Verschlechterung der Oberflächenrauigkeit führen, weitestgehend vermieden.

Als Strahlquelle wird für diese erste Bearbeitungsstufe beim vorliegenden Verfahren vorzugsweise ein Nd:YAG-, ein CO₂-, ein Diodenlaser oder eine Elektronenstrahlquelle eingesetzt. Die Laserleistung liegt hierbei im Bereich von 40 - 4000 W. Die Scangeschwindigkeit beträgt bei einem Strahldurchmesser von 100 - 1000 µm etwa 30 - 300 mm/s wobei ein Spurversatz zwischen 10 und 400 µm gewählt wird. Vorzugsweise liegen die Wechselwirkungszeiten mit der Oberfläche zwischen 200 µs und 10 ms. Durch mehrmaliges Überfahren der Oberfläche 1 bzw. des gerade in Bearbeitung befindlichen Abschnittes 4 mit einer Drehung der Bearbeitungsrichtung um z.B. 90° kann das Glättungsergebnis in dieser ersten Bearbeitungsstufe weiter verbessert werden.

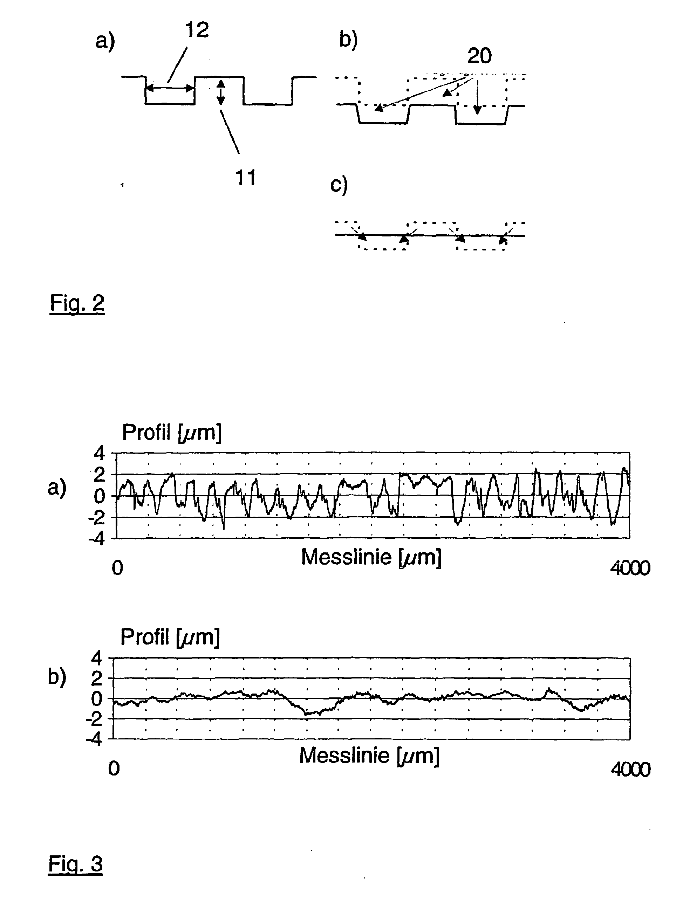

Figur 2 zeigt beispielhaft in stark schematisierter Darstellung einen Ausschnitt aus einem abstrahierten Ausgangsprofil (Figur 2a) einer zu bearbeitenden Oberfläche mit Makrorauigkeiten einer Höhe 11 von 10 µm sowie einer Breite bzw. einem Abstand 12 von 300 µm (nicht maßstabsgerecht eingezeichnet). Diese Maße entsprechen den typischen Abmessungen der Ausgangsrauigkeiten einer Oberfläche mit einer Frässtruktur.

In der Figur 2c ist hierbei der Effekt der ersten Bearbeitungsstufe des vorliegenden Verfahrens zu erkennen, bei dem die Oberfläche (vorher: gestrichelte Linie; nachher: durchgezogene Linie) bis zu einer Umschmelztiefe von etwa 10 µm umgeschmolzen wird. Durch die Umverteilung des Materials bei diesem Umschmelzvorgang wird eine Einebnung der Makrorauigkeiten erreicht.

Im Vergleich dazu zeigt Figur 2b ein Resultat, wie es beim Polieren durch flächiges Abtragen der Oberfläche erreicht wird. In diesem Beispiel ist deutlich zu erkennen, dass die Makrorauigkeiten durch den flächigen Abtrag (20: abgetragene Materialbereiche) nicht vollständig beseitigt werden können.

Figur 3 zeigt schließlich zwei gemessene Oberflächenprofile einer zu bearbeitenden bzw. bearbeiteten Oberfläche. Figur 3a stellt das gemessene Profil einer unbearbeiteten, gefrästen Oberfläche dar, in dem die Makrorauigkeiten noch deutlich erkennbar sind. Nach der Durchführung der ersten Bearbeitungsstufe des vorliegenden Verfahrens wird ein Profil dieser Oberfläche erreicht, wie es in der Figur 3b dargestellt ist. An dieser Figur ist die deutliche Glättung der Makrorauigkeiten nach der ersten Bearbeitungsstufe deutlich zu erkennen.

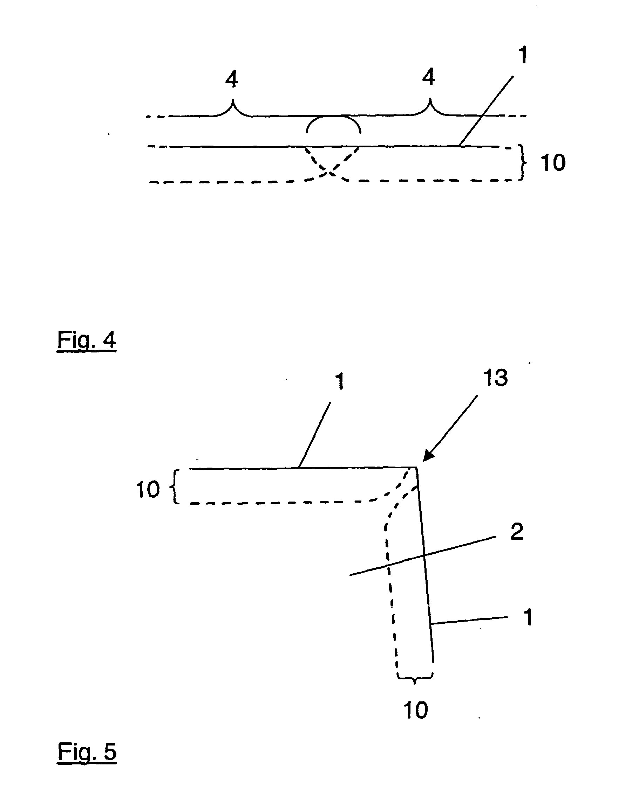

Bei größeren zu glättenden Oberflächen ist es erforderlich, mehrere der in der Figur 1 gezeigten Abschnitte 4 der Oberfläche 1 nacheinander mit der Laserstrahlung zu bearbeiten. Damit die Grenzen bzw. Ansätze jeweils benachbarter Abschnitte hierbei am späteren Werkstück nicht erkennbar sind, werden zum Rand dieser Abschnitte 4 hin die Bearbeitungsparameter kontinuierlich bzw. in Stufen so verändert, dass die erste Umschmelztiefe abnimmt. Figur 4 zeigt im Schnitt ein Beispiel für eine derartige Bearbeitungsstrategie. In diesem Schnitt grenzen zwei bearbeitete Abschnitte 4 aneinander. Im Übergangsbereich zwischen diesen beiden Abschnitten 4 wurde jeweils die Umschmelztiefe 10 kontinuierlich reduziert, so dass in diesem Übergangsbereich keine sprunghafte Änderung der Glättung verursacht wird. Die Änderung der Bearbeitungsparameter zum Rand der Abschnitte 4 hin kann durch Defokussierung des Laserstrahls, durch Verringerung der Leistung, bspw. durch Leistungsrampen, durch Erhöhung der Vorschubgeschwindigkeit, bspw. durch Vorschubgeschwindigkeitsrampen, durch Variation der Position der Bahnen sowie durch Variation der Position der Anfangs-, der End- und der Umkehrpunkte erreicht werden.

Beim Polieren von Spritzgusswerkzeugen ist es erforderlich, dass die Kante an der Trennebene des Werkzeuges nicht verrundet wird, da dies zu einer unerwünschten Gratbildung an den mit dem Werkzeug hergestellten Kunststoffteilen führen würde. Um eine Verrundung an beizubehaltenden Kanten der Werkzeugoberfläche zu vermeiden, kann bei der Durchführung des vorliegenden Verfahrens eine ähnliche Strategie wie beim Aneinandersetzen von Bearbeitungsabschnitten angewendet werden. Die Bearbeitungsparameter werden dabei zur Kante hin so verändert, dass die erste Umschmelztiefe abnimmt. Die Kante selbst darf nicht umgeschmolzen werden, da dies immer zu einer Verrundung führt. Figur 5 zeigt hierzu im Querschnitt die Veränderung der ersten Umschmelztiefe 10 an einer zu erhaltenden Kante 13 eines Werkstückes 2. Aus dieser Figur ist ersichtlich, dass von beiden an die Kante 13 angrenzenden Abschnitten der Oberfläche 1 her die erste Umschmelztiefe 10 zur Kante 13 hin abnimmt, so dass an der Kante 13 selbst keine Umschmelzung stattfindet. Diese Verringerung der Umschmelztiefe kann durch eine Reduzierung der Laserleistung bzw. eine Erhöhung der Vorschubgeschwindigkeit zur Kante 13 hin erreicht werden.

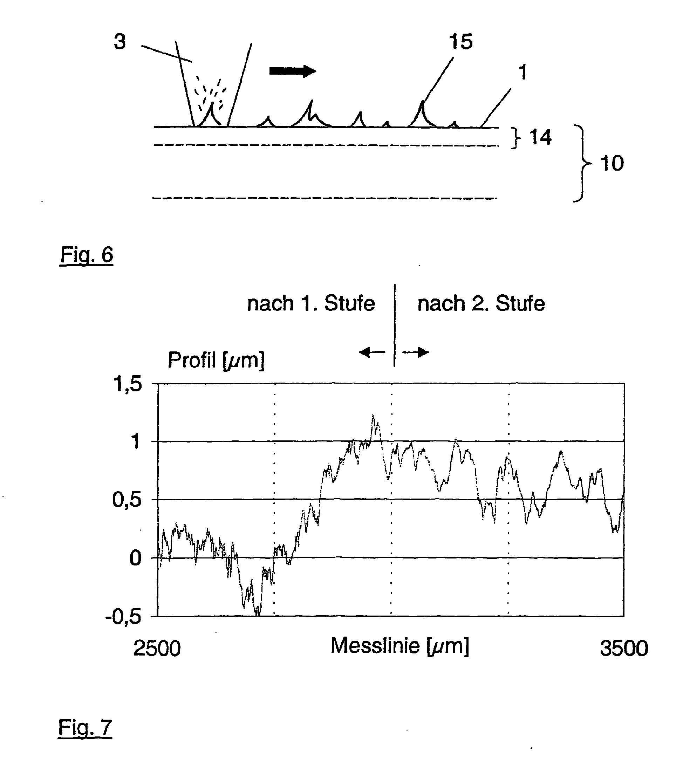

Nach der Glättung der Oberfläche in der ersten Bearbeitungsstufe wird in einer zweiten Bearbeitungsstufe mit einem gepulsten Laser mit Pulslängen < 1 µs der Glanzgrad weiter erhöht. Dabei wird durch Wahl einer zweiten Umschmelztiefe 14, die kleiner als die erste Umschmelztiefe 10 ist, eine sehr dünne Randschicht von < 5 µm umgeschmolzen und verbliebene Mikrorauigkeitsspitzen 15 durch Verdampfen des Materials abgetragen. Dies ist stark schematisiert in der Figur 6 dargestellt, in der die erste 10 und die zweite Umschmelztiefe 14 sowie die nach der ersten Bearbeitungsstufe verbliebenen Mikrorauigkeitsspitzen 15 angedeutet sind. Mit dieser zweiten Bearbeitungsstufe wird eine glänzende Oberfläche erreicht.

Figur 7 zeigt das gemessene Profil einer mit dem vorliegenden Verfahren geglätteten Oberfläche, wobei im linken Teil der Figur die verbleibende Oberflächenrauigkeit nach der ersten Bearbeitungsstufe und im rechten Teil der Figur das Oberflächenprofil nach der zweiten Bearbeitungsstufe dargestellt sind. In dieser Darstellung ist die deutliche Verringerung der nach der ersten Bearbeitungsstufe noch verbliebenen Mikrorauigkeiten in der Größenordnung von ≤ 0,1 µm an der Verringerung der Dicke der Linie erkennbar.

Die Bearbeitung erfolgt auch in der zweiten Bearbeitungsstufe durch Abrastern der Oberfläche, bspw. auf einer mäanderförmigen Bahn. Typische Bearbeitungsparameter für die zweite Bearbeitungsstufe sind der Einsatz eines Nd:YAG- oder Excimer-Lasers mit einer Laserleistung von 5 - 200 W und eine Scangeschwindigkeit von 300 - 3000 mm/s bei einem Strahldurchmesser von 50 - 500 µm und einem Spurversatz von 10 - 200 µm.

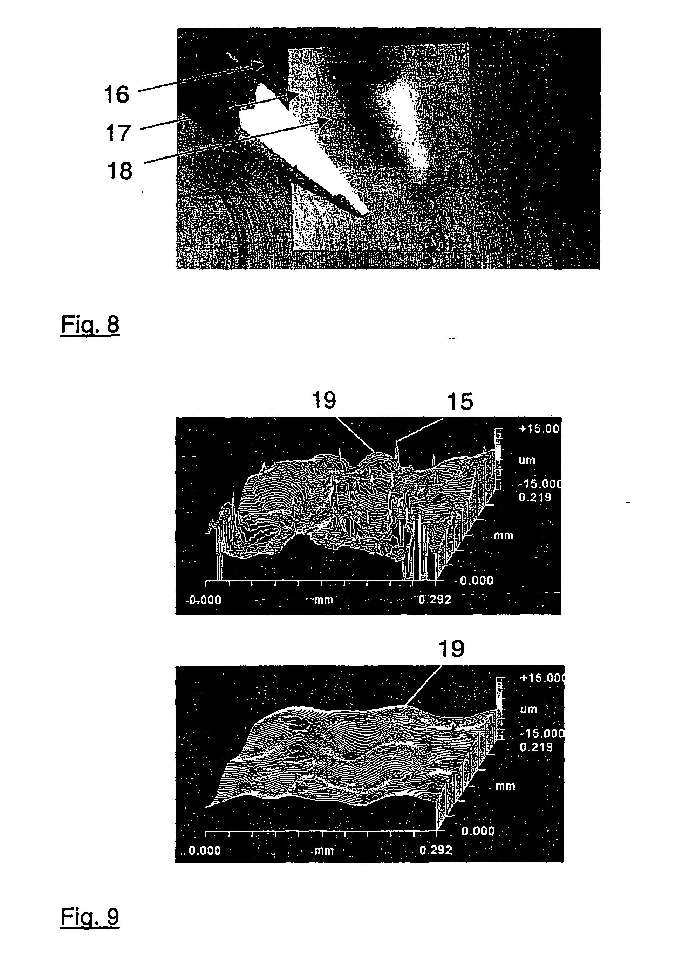

Figur 8 zeigt schließlich eine photographische Darstellung einer Oberfläche, in der ein Bereich 16 nach einer Fräsbearbeitung, ein Bereich 17 nach der ersten Bearbeitungsstufe sowie ein Bereich 18 nach der zweiten Bearbeitungsstufe zu erkennen sind. Die durch die zweite Bearbeitungsstufe erreichte glänzende Oberfläche im Vergleich zur Glättung durch die erste Bearbeitungsstufe bzw. zur ungeglätteten Oberfläche ist aus dieser Abbildung deutlich erkennbar.

Durch geeignete Wahl der Bearbeitungsparameter können Oberflächen auch so poliert werden, dass die in einer Oberfläche vorhandenen übergeordneten Strukturen erhalten bleiben, unerwünschte Mikrorauigkeiten jedoch beseitigt werden. Durch die Wahl der Bearbeitungsparameter, insbesondere der ersten Umschmelztiefe ist einstellbar, welche Strukturen der Oberfläche geglättet werden und welche bestehen bleiben. So ist es bspw. möglich, eine erodierte Oberfläche unter Erhaltung der Erodierstruktur hochglänzend zu polieren und somit genarbte Oberflächen für Spritzgusswerkzeuge herzustellen, wie dies bspw. in der Figur 9 veranschaulicht ist. Die Figur zeigt im oberen Teil eine erodierte, nicht polierte Oberfläche mit den entsprechenden übergeordneten Strukturen 19 und Mikrorauigkeiten 15. Im unteren Teil der Figur ist die gleiche erodierte Oberfläche nach der Glättung gemäß dem vorliegenden Verfahren dargestellt. Hierbei ist deutlich zu erkennen, dass die Mikrorauigkeiten vollständig beseitigt, die übergeordneten Strukturen 19 jedoch noch vorhanden sind. Werden die Bearbeitungsparameter bei der Bearbeitung variiert, so können unterschiedlich stark geglättete Strukturen erzeugt und dadurch auch verschiedene Graustufen, bspw. für die Erzeugung von Beschriftungen auf der Oberfläche, realisiert werden.

### Bezugszeichenliste

- 1: Oberfläche
- 2: Werkstück
- 3: Laserstrahl
- 4: Abschnitt der Oberfläche bzw. Bearbeitungsfeld
- 5: Spurbreite
- 6: Bahnen
- 7: Strahldurchmesser
- 7a: Strahlquerschnitt
- 8: Spurversatz
- 9: Bahnlänge
- 10: erste Umschmelztiefe
- 11: Höhe der Makrorauigkeiten
- 12: Breite bzw. Abstand der Makrorauigkeiten
- 13: Kante
- 14: zweite Umschmelztiefe
- 15: Mikrorauigkeiten
- 16: unbehandelter Bereich
- 17: bearbeiteter Bereich nach der ersten Bearbeitungsstufe
- 18: bearbeiteter Bereich nach der zweiten Bearbeitungsstufe
- 19: übergeordnete Struktur
- 20: abgetragenes Material

## Patentansprüche

1. Verfahren zum Glätten und Polieren von Oberflächen durch Bearbeitung mit energetischer Strahlung (3), insbesondere Laserstrahlung, bei dem die zu glättende Oberfläche (1) in einer ersten Bearbeitungsstufe unter Einsatz der energetischen Strahlung (3) mit ersten Bearbeitungsparametern zumindest einmal bis zu einer ersten Umschmelztiefe (10) umgeschmolzen wird, die größer als eine Strukturtiefe von zu glättenden Strukturen der zu glättenden Oberfläche und s 100 µm ist, und
dass in der ersten Bearbeitungsstufe kontinuierliche energetische Strahlung oder gepulste energetische Strahlung mit einer Pulsdauer ≥ 100µs eingesetzt und die Oberfläche (1) bis zu einer ersten Umschmelztiefe (10) von 5 bis 100 µm umgeschmolzen wird, und
dass in einer zweiten Bearbeitungsstufe unter Einsatz der energetischen Strahlung (3) mit zweiten Bearbeitungsparametern nach der ersten Bearbeitungsstufe auf der Oberfläche (1) verbleibende Mikrorauigkeiten durch Umschmelzen bis zu einer zweiten Umschmelztiefe (14), die kleiner als die erste Umschmelztiefe (10) ist, und Verdampfen von Rauhigkeitsspitzen (15) eingeebnet werden.

2. Verfahren nach Anspruch 1,
**dadurch gekennzeichnet,**
**dass** die ersten Bearbeitungsparameter so gewählt werden, dass keine Abtragung von Material stattfindet.

3. Verfahren nach Anspruch 1 oder 2,
**dadurch gekennzeichnet,**
**dass** in der zweiten Bearbeitungsstufe gepulste Laserstrahlung mit einer Pulsdauer s 1µs eingesetzt wird.

4. Verfahren nach einem der Ansprüche 1 bis 3,
**dadurch gekennzeichnet,**
**dass** die Oberfläche (1) in der ersten Bearbeitungsstufe bis zu einer ersten Umschmelztiefe (10) von ca. 10 bis 80 µm umgeschmolzen wird.

5. Verfahren nach einem der Ansprüche 1 bis 4,
**dadurch gekennzeichnet,**
**dass** die Oberfläche (1) in der zweiten Bearbeitungsstufe bis zu einer zweiten Umschmelztiefe (14) von maximal 5 µm umgeschmolzen wird.

6. Verfahren nach einem der Ansprüche 1 bis 5,
**dadurch gekennzeichnet,**
**dass** die Oberfläche (1) in der ersten Bearbeitungsstufe mehrmals nacheinander umgeschmolzen wird.

7. Verfahren nach Anspruch 6,
**dadurch gekennzeichnet,**
**dass** die erste Umschmelztiefe bei jedem erneuten Umschmelzvorgang geringer gewählt wird als beim jeweils vorangehenden Umschmelzvorgang.

8. Verfahren nach Anspruch 6 oder 7,
**dadurch gekennzeichnet,**
**dass** die energetische Strahlung (3) in parallelen Bahnen (6) über die Oberfläche (1) geführt wird, wobei aufeinander folgende Umschmelzprozesse eines Abschnitts (4) der Oberfläche (1) jeweils mit um einen Winkel gedrehten Bahnen (6) durchgeführt werden.

9. Verfahren nach einem der Ansprüche 1 bis 8,
**dadurch gekennzeichnet,**
**dass** die Bearbeitung in der ersten Bearbeitungsstufe nacheinander in mehreren nebeneinander liegenden Abschnitten (4) der Oberfläche (1) erfolgt, wobei jeweils zum Rand der Abschnitte (4) hin die Bearbeitungsparameter kontinuierlich oder in Stufen so verändert werden, dass die erste Umschmelztiefe (10) zum Rand der Abschnitte (4) hin abnimmt.

10. Verfahren nach einem der Ansprüche 1 bis 9,
**dadurch gekennzeichnet,**
**dass** die ersten Bearbeitungsparameter in der ersten Bearbeitungsstufe zum Erhalt von Kanten (13) auf der Oberfläche (1) kontinuierlich oder in Stufen so verändert werden, dass die erste Umschmelztiefe (10) zu den Kanten (13) hin abnimmt.

11. Verfahren nach einem der Ansprüche 1 bis 10,
**dadurch gekennzeichnet,**
**dass** die Laserstrahlung (3) auf einer oder mehreren mäanderförmigen Bahnen (6) über die Oberfläche (1) geführt wird.

12. Verfahren nach einem der Ansprüche 1 bis 11,
**dadurch gekennzeichnet,**
**dass** die Oberfläche (1) während der ersten und zweiten Bearbeitungsstufe mit Schutzgas beaufschlagt wird.

13. Verfahren nach einem der Ansprüche 1 bis 12,
**dadurch gekennzeichnet,**
**dass** die Bearbeitung mit einem linienförmigen oder rechteckförmigen Strahlquerschnitt der energetischen Strahlung (3) erfolgt.

14. Verfahren nach einem der Ansprüche 1 bis 13,
**dadurch gekennzeichnet,**
**dass** die zu glättende Oberfläche (1) vor dem Umschmelzen vorgewärmt wird.

15. Verfahren nach einem der Ansprüche 1 bis 14,
**dadurch gekennzeichnet,**
**dass** die ersten Bearbeitungsparameter so gewählt werden, dass in der zu glättenden Oberfläche (1) vorhandene übergeordnete Strukturen bei dem Umschmelzen erhalten bleiben.

## Claims

1. A method for smoothing and polishing surfaces by treating them with energetic radiation (3), in particular laser radiation, in which the to-be-smoothed surface (1) is remelted in a first treatment step using said energetic radiation (3) and employing first treatment parameters at least once down to a first remelting depth (10), which is greater than a structural depth of the to-be-smoothed structures of said to-be-smoothed surface and is ≤ 100 µm, and
that in said first treatment step continuous energetic radiation or pulsed energetic radiation with a pulse duration of ≥ 100 µs is employed and said surface (1) is remelted down to a first remelting depth (10) of 5 to 100 µm, and
that in a second treatment step using said energetic radiation (3) and employing second treatment parameters, micro-roughness remaining on said surface (1) after said first treatment step is leveled by remelting down to a second remelting depth (14), which is less than said first remelting depth (10), and by evaporating roughness peaks (15).

2. A method according to claim 1,
**characterized in that** said first treatment parameters are selected in such a manner that no ablation of material occurs.

3. A method according to claim 1 or 2,
**characterized in that** pulsed laser radiation with a pulse duration of ≤ 1 µs is employed in said second treatment step.

4. A method according to one of the claims 1 to 3,
**characterized in that** said surface (1) is remelted in said first treatment step down to a first remelting depth (10) of approximately 10 to 80 µm.

5. A method according to one of the claims 1 to 4,
**characterized in that** said surface (1) is remelted in said second treatment step down to a second remelting depth (14) of maximally 5 µm.

6. A method according to one of the claims 1 to 5,
**characterized in that** said surface (1) is remelted in said first treatment step multiple times in succession.

7. A method according to claim 6,
**characterized in that** with each new remelting step, said first remelting depth is selected less deep than in the previous remelting step.

8. A method according to claim 6 or 7,
**characterized in that** said energetic radiation (3) is led in parallel paths (6) over said surface (1) with successive remelting steps of a section (4) of said surface (1) being carried out with paths (6) turned at an angle.

9. A method according to one of the claims 1 to 8,
**characterized in that** treatment in said first treatment step occurs successively in a multiplicity of adjacent sections (4) of said surface (1), with the treatment parameters being changed continuously or in steps towards the border of said sections (4) in such a manner that said first remelting depth (10) decreases to said border of said sections (4).

10. A method according to one of the claims 1 to 9,
**characterized in that** in order to retain edges (13) on said surface (1), said first treatment parameters of said first treatment step are changed continuously or in steps in such a manner that said first remelting depth (10) decreases toward said edges (13).

11. A method according to one of the claims 1 to 10,
**characterized in that** said laser radiation (3) is led on one or a multiplicity of meandering paths (6) over said surface (1).

12. A method according to one of the claims 2 to 11,
**characterized in that** said surface (1) is impinged with protective gas during said first and said second treatment step.

13. A method according to one of the claims 1 to 12,
**characterized in that** treatment occurs with a beam cross section in form of a line or with a rectangular beam cross section of said energetic radiation (3).

14. A method according to one of the claims 1 to 13,
**characterized in that** said to-be-smoothed surface (1) is preheated before remelting.

15. A method according to one of the claims 1 to 14,
**characterized in that** said first treatment parameters are selected in such a manner that structures of significance of said to-be-smoothed surface (1) are retained during remelting.

## Revendications

1. Procédé de lissage et polissage de surfaces par usinage au rayonnement énergétique (3), notamment au rayonnement laser, dans lequel la surface à lisser (1) est, dans une première étape d'usinage, en utilisant le rayonnement énergétique (3), refondue du moins une fois suivant de premiers paramètres d'usinage jusqu'à une première profondeur de refusion (10) supérieure à une profondeur structurelle de structure à lisser de la surface à lisser et est ≤ 100 µm et,
dans la première étape d'usinage, du rayonnement énergétique continu ou du rayonnement énergétique impulsé d'une durée d'impulsion ≥ 100 µs est utilisé et la surface (1) est refondue jusqu'à une première profondeur de refusion (10) allant de 5 à 100 µm et,
dans une deuxième étape d'usinage, en utilisant le rayonnement énergétique (3), suivant de deuxièmes paramètres d'usinage, les microrugosités restant sur la surface (1) après la première étape d'usinage sont aplanies par refusion jusqu'à une deuxième profondeur de refusion (14) qui est plus faible que la première profondeur de refusion (10) et par vaporisation des pointes des rugosités (15).

2. Procédé selon la revendication 1,
**caractérisé en ce que**
les premiers paramètres d'usinage sont choisis de manière à ce qu'il n'y ait pas d'enlèvement de matière.

3. Procédé selon la revendication 1 ou 2,
**caractérisé en ce que**,
pendant la première étape d'usinage, on utilise du rayonnement laser impulsé d'une durée d'impulsion s 1 µs.

4. Procédé selon une des revendications 1 à 3,
**caractérisé en ce que**
la surface (1) est refondue pendant la première étape d'usinage jusqu'à une première profondeur de refusion (10) d'environ 10 à 80 µm.

5. Procédé selon une des revendications 1 à 4,
**caractérisé en ce que**
la surface (1) est refondue pendant la deuxième étape d'usinage jusqu'à une deuxième profondeur de refusion (10) de 5 µm au maximum.

6. Procédé selon une des revendications 1 à 5,
**caractérisé en ce que**
la surface (1) est refondue plusieurs fois successives pendant la première étape d'usinage.

7. Procédé selon la revendication 6,
**caractérisé en ce que**
la première profondeur de refusion, à chaque nouvelle opération de refusion, est définie plus faible que pour l'opération de refusion respectivement précédente.

8. Procédé selon la revendication 6 ou 7,
**caractérisé en ce que**
le rayonnement énergétique (3) est guidé en bandes parallèles (6) sur la surface (1), tandis que les processus de refusion se succédant d'une section (4) de la surface (1) sont réalisés respectivement avec des bandes (6) tournées suivant un angle.

9. Procédé selon une des revendications 1 à 8,
**caractérisé en ce que**
l'usinage a lieu, pendant la première étape d'usinage, successivement dans plusieurs sections juxtaposées (4) de la surface (1), tandis que les paramètres d'usinage sont modifiés en continu ou graduellement en direction du bord des sections (4) de manière à ce que la première profondeur de refusion (10) diminue en direction du bord des sections (4).

10. Procédé selon une des revendications 1 à 9,
**caractérisé en ce que**
les premiers paramètres d'usinage, pendant la première étape d'usinage, pour obtenir des arêtes (13) sur la surface (1), sont modifiés en continu ou graduellement de manière à ce que la première profondeur de refusion (10) diminue en direction des arêtes (13).

11. Procédé selon une des revendications 1 à 10,
**caractérisé en ce que**
le rayonnement laser (3) est guidé sur une ou plusieurs bandes en forme de méandres (6) sur la surface (1).

12. Procédé selon une des revendications 1 à 11,
**caractérisé en ce que**
la surface (1) reçoit du gaz protecteur pendant la première et la deuxième étape d'usinage.

13. Procédé selon une des revendications 1 à 12,
**caractérisé en ce que**
l'usinage est fait avec une section transversale de rayon de forme linéaire ou rectangulaire du rayonnement énergétique (3).

14. Procédé selon une des revendications 1 à 13,
**caractérisé en ce que**
la surface à lisser (1) est préchauffée avant la refusion.

15. Procédé selon une des revendications 1 à 14,
**caractérisé en ce que**
les premiers paramètres d'usinage sont choisis de manière à ce que les structures préposées existantes dans la surface à lisser (1) restent inchangées lors de la refusion.
